# EUROPEAN PATENT APPLICATION

(11) **EP 4 603 312 A1**
(43) Date of publication of application: **20.08.2025**
(21) Application number: 23876255.3
(22) Date of filing: 30.06.2023
(51) Int. Cl.: B60K 1/04, H01M 50/358

(54) **BATTERY PACK ASSEMBLY AND ELECTRIC VEHICLE**

(30) Priority: 13.10.2022 CN 202222702321 U
(71) Applicant: BYD Company Limited, Shenzhen, Guangdong 518118 (CN)
(72) Inventor: LI, Jianqiang, Shenzhen, Guangdong 518118 (CN); WAN, Long, Shenzhen, Guangdong 518118 (CN); ZHONG, Jianbo, Shenzhen, Guangdong 518118 (CN); HENG, Ming, Shenzhen, Guangdong 518118 (CN)
(74) Representative: Mathys & Squire
(86) International application number: PCT/CN2023/104462
(87) International publication number: WO 2024/078046

(57) **Abstract**

An electric vehicle, provided with a battery pack assembly. The battery pack assembly comprises a frame, a composite cold plate and at least one battery cell; the frame comprises a tray and exhaust channels in communication with the outside; the exhaust channels are arranged on two opposite sides of the tray; the composite cold plate is arranged on the tray; the composite cold plate comprises a flow passage plate, and a concave rib-convex rib structure is formed on the surface of the flow passage plate; a concave rib is arranged between every two adjacent convex ribs; cold plate flow passages are defined by concave ribs and the tray, and the cold plate flow passages are in communication with the exhaust channels; the battery cell is arranged on the composite cold plate; poles of the battery cell face the composite cold plate; a first explosion-proof valve is provided on the side of the battery cell facing the composite cold plate, and the first explosion-proof valve is in communication with the cold plate flow passages.

## Description

### CROSS-REFERENCE TO RELATED APPLICATIONS

The present disclosure claims priority to Chinese Patent Application No. 202222702321.9, entitled "BATTERY PACK ASSEMBLY AND ELECTRIC VEHICLE" filed on October 13, 2022. The entire content of the above-referenced application is incorporated herein by reference.

### FIELD

The present disclosure relates to the technical field of batteries, and more specifically, to a battery pack assembly and an electric vehicle.

### BACKGROUND

With the continuous development of new energy technologies, the use of electric vehicles is becoming increasingly widespread. As the power components of electric new energy vehicles, batteries affect the performance of electric vehicles.

A battery pack of an electric vehicle is usually mounted at the bottom of a chassis of the entire vehicle, and vent holes of the battery pack are provided at the bottom of a battery tray. Once thermal runaway occurs in a battery core of the battery pack, generated high-temperature fumes need to be discharged from the battery pack through the vent holes distributed at the bottom of the battery tray. However, in existing solutions, the terminals of battery cores and explosion-proof valves are oriented upward, while vent holes are located below a battery pack, and the vent direction is vertically downward and so is inconsistent with the arrangement direction of an explosion-proof valve. In this way, the problem of the high-temperature fumes ejected during thermal runaway of the battery core spreading inside the battery pack cannot be solved, and therefore, the battery core cannot be quickly isolated from the high-temperature fumes. The high-temperature fumes generated during thermal runaway of a battery core are sufficient to cause thermal runaway of other battery cores, which may cause a serious accident.

### SUMMARY

An objective of the present disclosure is to provide a new technical solution of a battery pack assembly and an electric vehicle.

According to a first aspect, an embodiment of the present disclosure provides a battery pack assembly. The battery pack assembly includes:
a frame, the frame including a tray and exhaust channels in communication with the outside, and the exhaust channels being arranged on two opposite sides of the tray;
a composite cold plate, the composite cold plate being arranged on the tray, the composite cold plate including a flow channel plate, and a concave-convex rib structure being formed on a surface of the flow channel plate, where a concave rib is arranged between two adjacent convex ribs, cold plate flow channels being defined by the concave ribs and the tray, and the cold plate flow channels being in communication with the exhaust channels; and
at least one battery core, the battery core being arranged on the composite cold plate, terminals of the battery core facing the composite cold plate, first explosion-proof valves being arranged on a side of the battery core facing the composite cold plate, and the first explosion-proof valve being in communication with the cold plate flow channel.

Optionally, a first through hole configured to avoid the first explosion-proof valve is provided on the flow channel plate at a position opposite to the first explosion-proof valve.

Optionally, the composite cold plate further includes a temperature equalization plate, the temperature equalization plate being arranged on a side of the flow channel plate facing away from the tray, and the temperature equalization plate and the flow channel plate are connected by brazing.

Optionally, a second through hole configured to avoid the first explosion-proof valve is provided on the temperature equalization plate at a position opposite to the first explosion-proof valve.

Optionally, second explosion-proof valves are arranged on the frame, the second explosion-proof valve is located at an air outlet of the exhaust channel, and an arrangement direction of the second explosion-proof valve faces the position below the frame.

Optionally, a side of the tray is provided with a groove, and the composite cold plate is bonded and fixed in the groove through a structural adhesive.

Optionally, the battery pack assembly further includes a top cover, the top cover being located at a top of the battery core and being connected to the frame, and an accommodating space is formed between the top cover and the frame; and
the battery core and the composite cold plate below the battery core are together arranged in the accommodating space.

Optionally, a side of the battery core, provided with the terminal and the first explosion-proof valve, is bonded and fixed to the temperature equalization plate.

Optionally, the frame is of an integrally stamped and formed structure.

Optionally, the concave-convex rib structure is formed on the flow channel plate by stamping.

Optionally, the exhaust channels are separately arranged on two opposite sides of the tray in a length direction of the frame, and the cold plate flow channels and the exhaust channels are vertically arranged and in communication with each other.

According to a second aspect, an embodiment of the present disclosure provides an electric vehicle. The electric vehicle includes the battery pack assembly according to the second aspect.

The present disclosure has the following beneficial effects:
An embodiment of the present disclosure provides a battery pack assembly in which a frame of a new structure is provided for a battery pack, a tray with exhaust channels is integrated on the frame, and the tray is suitable for being configured to invert a cell battery pack. When a battery core in the battery pack undergoes thermal runaway, high-temperature fumes generated after thermal runaway of the battery core can be evacuated in time through cold plate flow channels, thereby isolating the high-temperature fumes from the battery core, reducing the probability of thermal runaway of the entire battery pack, and ensuring the use safety of the battery pack.

Other features and advantages of the present disclosure will become apparent from the following detailed description of examples of embodiments of the present disclosure with reference to accompanying drawings.

### BRIEF DESCRIPTION OF THE DRAWINGS

Accompanying drawings incorporated into and constituting a part of the specification show embodiments of the present disclosure, and are used together with the specification to explain the principle of the present disclosure.
FIG. 1 is a first structural exploded view of a battery pack assembly according to an embodiment of the present disclosure;
FIG. 2 is a first schematic structural view of a battery pack assembly according to an embodiment of the present disclosure;
FIG. 3 is a partial enlarged view of a part A in FIG. 2;
FIG. 4 is a second structural exploded view of a battery pack assembly according to an embodiment of the present disclosure;
FIG. 5 is a first schematic structural view of a battery pack assembly according to an embodiment of the present disclosure;
FIG. 6 is a second schematic structural view of a battery pack assembly according to an embodiment of the present disclosure; and
FIG. 7 is a schematic structural view of a composite cold plate of a battery pack assembly according to an embodiment of the present disclosure.

In the drawings:
10. frame; 11. tray; 12. exhaust channel; 13. second explosion-proof valve; 20. composite cold plate; 21. flow channel plate; 211. convex rib; 212. concave rib; 213. cold plate flow channel; 214. first through hole; 22. temperature equalization plate; 221. second through hole; 30. battery core; 31. terminal; 32. first explosion-proof valve; 40. top cover.

### DETAILED DESCRIPTION

Various examples of embodiments of the present disclosure are described in detail with reference to the accompanying drawings. It should be noted that: unless otherwise specified, the opposite arrangement, numerical expressions, and numerical values of components and steps described in these embodiments do not limit the scope of the present disclosure.

The following descriptions of at least one example of embodiments are merely illustrative actually, and in no way constitute any limitation on the present disclosure and the application or use of the present disclosure.

Technologies, methods, and devices known to those of ordinary skill in related arts may not be discussed in detail, but where appropriate, the technologies, methods, and devices should be considered as a part of the specification.

In all examples shown and discussed herein, any specific value should be construed as merely exemplary and not as limitations. Therefore, other examples of embodiments may have different values.

It should be noted that: similar numerals and letters denote similar items in the following accompanying drawings, therefore, once an item is defined in an accompanying drawing, the item does not need to be further discussed in the subsequent accompanying drawings.

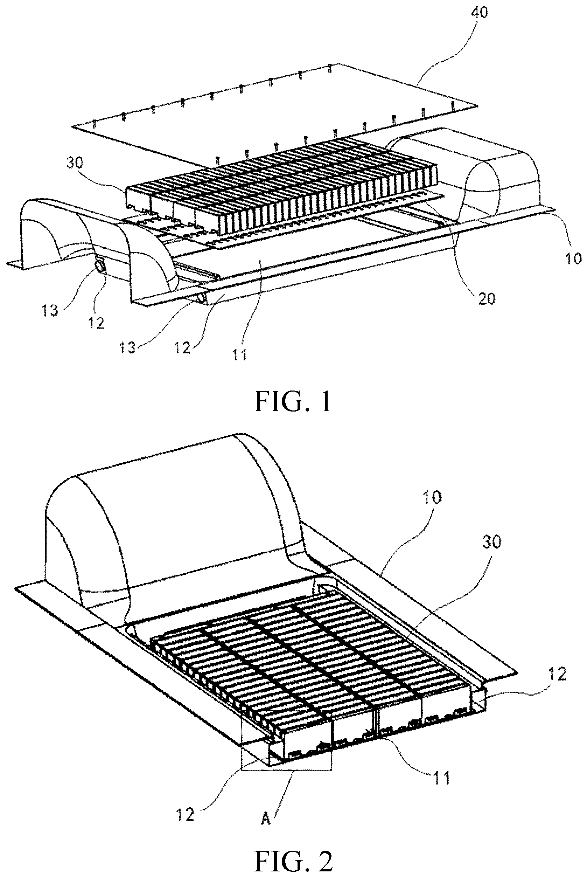

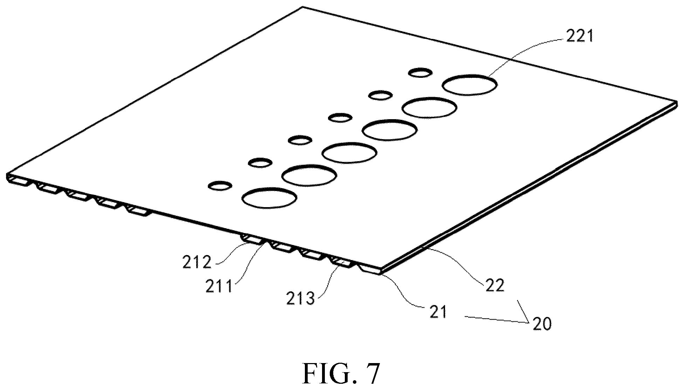

A battery pack assembly and an electric vehicle provided in embodiments of the present disclosure are described in detail below with reference to FIG. 1 to FIG. 7.

According to an embodiment of the present disclosure, a battery pack assembly is provided. The battery pack assembly is particularly applicable to a battery pack in which a battery core is mounted upside down. Various components in the battery pack are accommodated by a tray 11 formed on a frame 10, and high-temperature fumes and flames generated during thermal runaway of the battery core can be exhausted in time by exhaust channels 12 on the frame 10. The entire battery pack assembly has high safety, and is suitable for being applied to new energy electric vehicles.

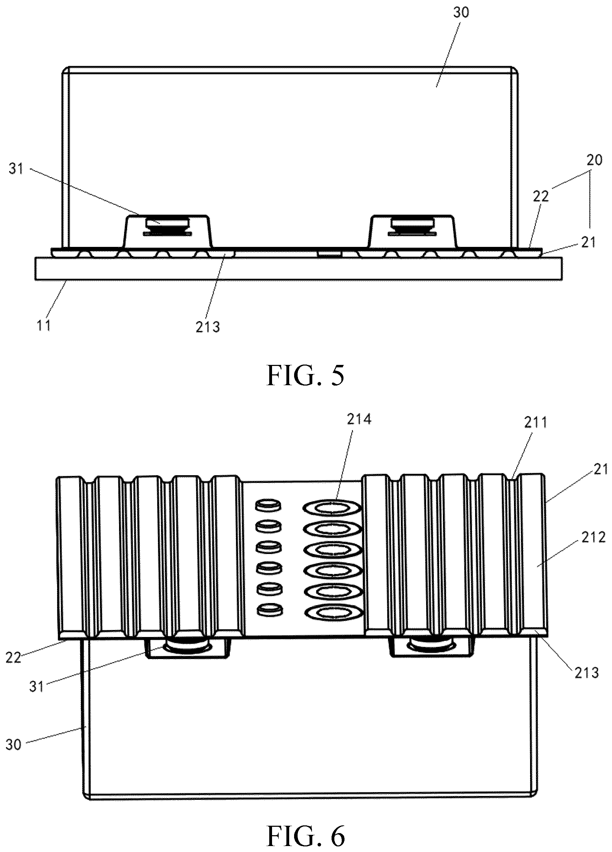

An embodiment of the present disclosure provides a battery pack assembly. Referring to FIG. 1 to FIG. 7, the battery pack assembly includes a frame 10, a composite cold plate 20, and at least one battery core 30. The frame 10 includes a tray 11 and exhaust channels 12 in communication with the outside, and the exhaust channels 12 are arranged on two opposite sides of the tray 11. The composite cold plate 20 is arranged on the tray 11, the composite cold plate 20 includes a flow channel plate 21, and a concave-convex rib structure is formed on a surface of the flow channel plate 21, where referring to FIG. 6, a concave rib 212 is arranged between two adjacent convex ribs 211, cold plate flow channels 213 are defined by the concave ribs 212 and the tray 11, and the cold plate flow channels 213 are in communication with the exhaust channels 12. The battery core 30 is arranged on the composite cold plate 20, terminals 31 of the battery core 30 face the composite cold plate 20, first explosion-proof valves 32 are arranged on a side of the battery core 30 facing the composite cold plate 20, and the first explosion-proof valve 32 is in communication with the cold plate flow channel 213.

In this embodiment of the present disclosure, the frame 10 belongs to a part of a vehicle body, the tray 11 configured to support the battery core 30 and the composite cold plate 20 is directly integrated on the frame, and the exhaust channels 12 are also integrated on the frame 10. That is, the solution of the present disclosure is to directly integrate the tray 11 for carrying the battery core 30 and the exhaust channels 12 on the frame 10. In this way, a separate battery tray does not need to be designed for the battery pack.

In the battery pack assembly in this embodiment of the present disclosure, referring to FIG. 1 and FIG. 2, the battery core 30 is mounted on the composite cold plate 20 upside down, that is, the terminals 31 on the battery core 30 directly face the composite cold plate 20, which may also be understood as facing the position below the frame 10 or the ground. Furthermore, the first explosion-proof valve 32 on the battery core 30 and the terminals 31 are designed to be located on a same side, that is, the first explosion-proof valve 32 also faces the composite cold plate 20. The composite cold plate 20 is mounted on the tray 11. Dedicated cold plate flow channels 213 are formed on the composite cold plate 20, and the cold plate flow channels 213 are in communication with the exhaust channels 12 integrated on the frame 10. With this design, when any battery core 30 undergoes thermal runaway, the first explosion-proof valve 32 on the battery core is cracked, the exhausted high-temperature fire flow directly flows into the exhaust channels 12 through the cold plate flow channels 213, and then, the exhaust channels 12 evacuate the high-temperature fire flow in time. In this way, the use safety of the entire battery pack assembly can be improved.

In the battery pack assembly in this embodiment of the present disclosure, a composite cold plate 20 is arranged between the tray 11 and the battery core 30 that is mounted upside down. A layer of the composite cold plate 20 is the flow channel plate 21, a surface of the flow channel plate 21 is not a flat plane, but is formed with a continuous concave-convex rib structure, and multiple cold plate flow channels 213 are defined by the concave-convex rib structure and the tray 11 above. High-temperature fumes and flames that are exhausted during thermal runaway of the battery core 30 may be directly guided into the exhaust channels 12 on two sides of the frame 10 through the cold plate flow channels 213, and finally may be evacuated smoothly. The entire process of fume evacuation and fire evacuation may be timely and fast, and high-temperature fumes and flames do not contact the battery core 30, which can well ensure the safety of other battery cores 30 mounted on the composite cold plate 20.

In addition, it should be noted that when the battery core 30 in the battery pack assembly undergoes thermal runaway, the first explosion-proof valve 32 on the battery core cracks, causing spillage of high-temperature fumes and flames.

In this embodiment of the present disclosure, the battery pack assembly may include multiple battery cores 30, and the number of the battery cores may be adjusted according to needs. This is not limited in the present disclosure.

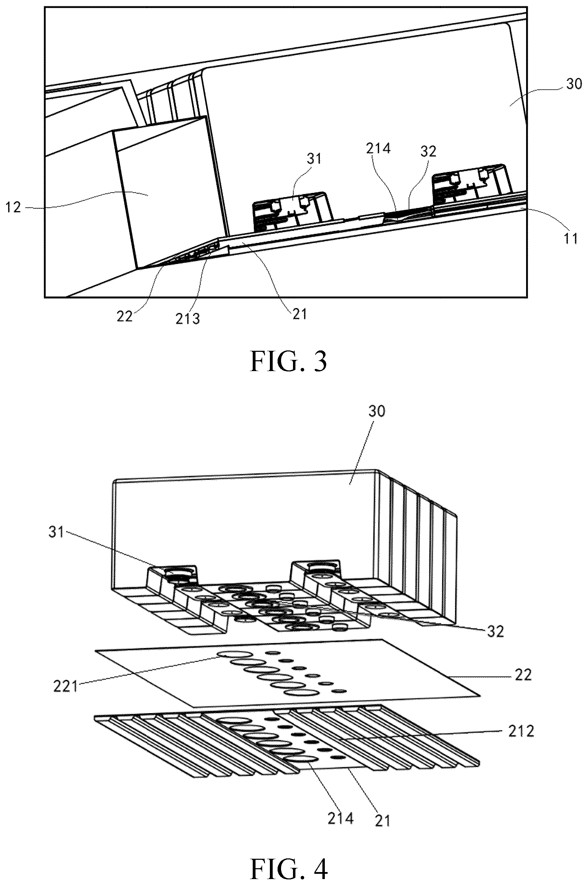

In some examples of the present disclosure, referring to FIG. 4, FIG. 6, and FIG. 7, a first through hole 214 configured to avoid the first explosion-proof valve 32 is provided on the flow channel plate 21 at a position opposite to the first explosion-proof valve 32.

In this embodiment of the present disclosure, the foregoing first through hole 214 is provided on the flow channel plate 21, and after the battery core 30 is mounted on the composite cold plate 20, the first explosion-proof valve 32 on the battery core 30 may pass through the first through hole 214. In this way, during thermal runaway of the battery core 30, high-temperature fumes and flames that are ejected through the first explosion-proof valve 32 may be isolated by at least the flow channel plate on the composite cold plate 20, so as to prevent the high-temperature fumes and flames from negatively affecting other battery cores 30, which is beneficial for reducing the probability of thermal runaway of the entire battery pack assembly.

In some examples of the present disclosure, referring to FIG. 4 to FIG. 7, the composite cold plate 20 further includes a temperature equalization plate 22, the temperature equalization plate 22 is arranged on a side of the flow channel plate 21 facing away from the tray 11, and the temperature equalization plate 22 and the flow channel plate 21 are connected by brazing.

In this embodiment of the present disclosure, the composite cold plate 20 does not have a single-layer structure. In addition to a layer of flow channel plate 21, the composite cold plate 20 further has a layer of temperature equalization plate 22. Specifically, the temperature equalization plate 22 covers the flow channel plate 21, so that the composite cold plate 20 has a double-layer composite structure along a thickness direction.

When the battery core 30 is mounted on the composite cold plate 20 upside down, the side of the battery core 30, provided with the terminals 31 and the first explosion-proof valve 32, is directly in contact with the temperature equalization plate 22. The temperature equalization plate 22 may be configured to effectively cool the high-temperature fumes and flames to further reduce the impact of the high-temperature fumes on the battery core 30. With this design, the composite cold plate 20 may minimize the occurrence probability of thermal runaway of the entire battery pack assembly.

That is to say, based on the structural design, the composite cold plate 20 in this embodiment of the present disclosure has the following cooling effect: the high-temperature fumes may be gradually cooled in a process of discharging the high-temperature fumes from the battery core 30 to the outside, so that hazards of the high-temperature fumes are gradually reduced. In this way, the use safety of the battery pack assembly is ensured.

After the temperature of the high-temperature fumes is reduced through the temperature equalization plate 22, multiple cold plate flow channels 213 are formed on the flow channel plate 21 below the temperature equalization plate 22 at the positions of the concave ribs 212, and the fumes after temperature reduction may flow into the exhaust channels 12 on the frame 10 through the cold plate flow channels 213 formed by the concave ribs 212 and then are evacuated.

In some examples of the present disclosure, referring to FIG. 6, a second through hole 221 configured to avoid the first explosion-proof valve 32 is provided on the temperature equalization plate 22 at a position opposite to the first explosion-proof valve 32.

That is to say, two layers of structures of the composite cold plate 20 in this embodiment of the present disclosure, namely the temperature equalization plate 22 and the flow channel plate 21 are both provided with a through hole for avoiding the first explosion-proof valve 32 on the battery core 30. Specifically, the second through hole 221 on the temperature equalization plate 22 corresponds to the first through hole 214 on the flow channel plate 21, and the second through hole and the first through hole may form a flow channel. In this way, during thermal runaway of the battery core 30, the high-temperature fumes ejected by the first explosion-proof valve 32 flow into the first through hole 214 along the second through hole 221, and then flow to the exhaust channels 12 along the cold plate flow channels 213 on the flow channel plate 21. In this process, the high-temperature fumes are blocked by the composite cold plate 20 on an outer side of the battery core 30, so that the impact of the high-temperature fumes on the battery core 30 may be reduced.

In some examples of the present disclosure, referring to FIG. 1, second explosion-proof valves 13 are arranged on the frame 10, the second explosion-proof valve 13 is located at an air outlet of the exhaust channel 12, and an arrangement direction of the second explosion-proof valve 13 faces the position below the frame 10.

Referring to FIG. 1, at the rear of the frame 10 (that is, at the rear of a running direction of a vehicle), a second explosion-proof valve 13 is arranged at a tail end of each exhaust channel 12 on the frame 10, that is, two second explosion-proof valves 13 are arranged on the frame 10. A mounting angle of the second explosion-proof valve 13 is downward, that is, the mounting angle faces the ground, so as to ensure that high-temperature fumes and flames are ejected to the position below the vehicle body, namely the ground, rather than to the interior of the vehicle.

In some examples of the present disclosure, referring to FIG. 1, a side of the tray 11 is provided with a groove, and the composite cold plate 20 is bonded and fixed in the groove through a structural adhesive.

In this embodiment of the present disclosure, a recess structure capable of accommodating one or more battery cores 30 may be directly stamped on the frame 10. The recess structure is the foregoing groove and may be configured to support each battery core 30 and the composite cold plate 20. In this way, it is no longer necessary to separately provide a tray structure for components such as battery cores, thereby reducing the number of parts of the battery pack assembly.

Optionally, the composite cold plate 20 is bonded and fixed in the groove through a structural adhesive. In this way, after the composite cold plate 20 is damaged, the composite cold plate is easily stripped from the frame 10, the composite cold plate 20 may be conveniently replaced independently, and the maintenance cost is relatively low.

In some examples of the present disclosure, referring to FIG. 1, the battery pack assembly further includes a top cover 40, the top cover 40 is located at a top of the battery core 30 and is connected to the frame 10, and an accommodating space is formed between the top cover 40 and the frame 10; and the battery core 30 and the composite cold plate 20 below the battery core 30 are together arranged in the accommodating space.

In this embodiment of the present disclosure, the top cover 40 and the frame 10 may be connected by combination of a glue and a fastener, thereby ensuring the overall sealing performance of the battery pack assembly.

In some examples of the present disclosure, the frame 10 is of an integrally stamped and formed structure.

The frame in this embodiment of the present disclosure is integrated with the tray 11 configured to support the battery core 30 and the composite cold plate 20, the exhaust channels 12 of a set shape are formed on two sides of the tray 11, and the exhaust channels 12 are in communication with the outside, so as to facilitate the evacuation of high-temperature fumes and flames.

Optionally, a side of the battery core 30, provided with the terminal 31 and the first explosion-proof valve 32, is bonded and fixed to the temperature equalization plate 22.

When the battery core 30 is damaged, the damaged battery core may be replaced independently.

In some examples of the present disclosure, the concave-convex rib structure is formed on the flow channel plate 21 by stamping. The process is simple, and the formed flow channel plate 21 has an aesthetic appearance and is sturdy and durable.

In some examples of the present disclosure, referring to FIG. 1 to FIG. 3, the exhaust channels 12 are separately arranged on two opposite sides of the tray 11 in a length direction of the frame 10, and the cold plate flow channels 213 and the exhaust channels 12 are vertically arranged and in communication with each other.

In this embodiment of the present disclosure, the tray 11 and the exhaust channels 12 on two sides are integrated on the frame 10, and the exhaust channels 12 are arranged along a length direction of the frame 10, so that high-temperature fumes and flames generated during thermal runaway of the battery core 30 are discharged to the rear of the vehicle when the high-temperature fumes and flames are evacuated through the exhaust channels 12. The cold plate flow channels 213 are parallel to each other and are vertically in communication with the exhaust channels 12, thereby being favorable for quickly discharging high-temperature fumes and flames to the exhaust channels 12.

According to another embodiment of the present disclosure, an electric vehicle is further provided. The electric vehicle includes the battery pack assembly as mentioned above.

For a specific implementation of the vehicle in this embodiment of the present disclosure, refer to the foregoing battery pack assembly embodiments. Therefore, there are at least all beneficial effects brought by the technical solutions of the foregoing embodiments, and details are not described herein again.

The foregoing embodiments of the present disclosure focus on differences among the embodiments. As long as different optimization features among the embodiments are not contradictory, different optimization features may be combined to form better embodiments. In consideration of brief description, details are not described herein again.

Although some specific embodiments of the present disclosure have been described in detail by way of examples, those skilled in the art should understand that the foregoing examples are only for description and are not intended to limit the scope of the present disclosure. Those skilled in the art should understand that modifications may be made to the foregoing embodiments without departing from the scope and spirit of the present disclosure. The scope of the present disclosure is defined by the appended claims.

## Claims

1. A battery pack assembly, comprising:
a frame (10), the frame (10) comprising a tray (11) and exhaust channels (12) in communication with the outside, and the exhaust channels (12) being arranged on two opposite sides of the tray (11);
a composite cold plate (20), the composite cold plate (20) being arranged on the tray (11), the composite cold plate (20) comprising a flow channel plate (21), and a concave-convex rib structure being formed on a surface of the flow channel plate (21), wherein a concave rib (212) is arranged between two adjacent convex ribs (211), cold plate flow channels (213) are defined by the concave ribs (212) and the tray (11), and the cold plate flow channels (213) are in communication with the exhaust channels (12); and
at least one battery core (30), the battery core (30) being arranged on the composite cold plate (20), terminals (31) of the battery core (30) facing the composite cold plate (20), first explosion-proof valves (32) being arranged on a side of the battery core (30) facing the composite cold plate (20), and the first explosion-proof valve (32) being in communication with the cold plate flow channel (213).

2. The battery pack assembly according to claim 1, wherein a first through hole (214) configured to avoid the first explosion-proof valve (32) is provided on the flow channel plate (21) at a position opposite to the first explosion-proof valve (32).

3. The battery pack assembly according to claim 1 or 2, wherein the composite cold plate (20) further comprises a temperature equalization plate (22), the temperature equalization plate (22) is arranged on a side of the flow channel plate (21) facing away from the tray (11), and the temperature equalization plate (22) and the flow channel plate (21) are connected by brazing.

4. The battery pack assembly according to claim 3, wherein a second through hole (221) configured to avoid the first explosion-proof valve (32) is provided on the temperature equalization plate (22) at a position opposite to the first explosion-proof valve (32).

5. The battery pack assembly according to any one of claims 1 to 4, wherein second explosion-proof valves (13) are arranged on the frame (10), the second explosion-proof valve (13) is located at an air outlet of the exhaust channel (12), and an arrangement direction of the second explosion-proof valve (13) faces a position below the frame (10).

6. The battery pack assembly according to any one of claims 1 to 5, wherein a side of the tray (11) is provided with a groove, and the composite cold plate (20) is bonded and fixed in the groove through a structural adhesive.

7. The battery pack assembly according to any one of claims 1 to 6, wherein the battery pack assembly further comprises a top cover (40), the top cover (40) is located at a top of the battery core (30) and is connected to the frame (10), and an accommodating space is formed between the top cover (40) and the frame (10); and
the battery core (30) and the composite cold plate (20) below the battery core (30) are together arranged in the accommodating space.

8. The battery pack assembly according to claim 3 or 4, wherein a side of the battery core (30), provided with the terminal (31) and the first explosion-proof valve (32), is bonded and fixed to the temperature equalization plate (22).

9. The battery pack assembly according to any one of claims 1 to 8, wherein the frame (10) is of an integrally stamped and formed structure.

10. The battery pack assembly according to any one of claims 1 to 9, wherein the concave-convex rib structure is formed on the flow channel plate (21) by stamping.

11. The battery pack assembly according to any one of claims 1 to 10, wherein the exhaust channels (12) are separately arranged on two opposite sides of the tray (11) in a length direction of the frame (10), and the cold plate flow channels (213) and the exhaust channels (12) are vertically arranged and in communication with each other.

12. An electric vehicle, comprising the battery pack assembly according to any one of claims 1 to 11.
